# EUROPEAN PATENT SPECIFICATION

(11) **EP 0 909 582 B1**
(45) Date of publication and mention of the grant of the patent: **28.12.2005**
(21) Application number: 98308445.0
(22) Date of filing: 15.10.1998
(51) Int. Cl.: B01J 29/06, C10G 11/05, B01J 29/40, B01J 29/46

(54) **Cracking catalytic for the production of light olefins and its preparation**
Krackkatalysator für die Produktion von leichten Olefinen und dessen Herstellung
Catalyseur pour le craquage catalytique pour la production d'oléfines légers et sa préparation

(30) Priority: 15.10.1997 CN 97119012
(43) Date of publication of application: 21.04.1999
(73) Proprietor: CHINA PETRO-CHEMICAL CORPORATION, Beijing (CN); RESEARCH INSTITUTE OF PETROLEUM PROCESSING, SINOPEC, Beijng (CN)
(72) Inventor: Shi, Zhicheng, Research Inst. of Petrole. Process., Haidian District, Beijing (CN); Zhang, Fengmei, Research Inst. of Petrol. Process., Haidian District, Beijing (CN); Liu, Shunhua, Research Inst. of Petroleu. Process., Haidian District, Beijing (CN)
(74) Representative: Colmer, Stephen Gary

(56) References cited:
- EP-A- 0 305 720
- EP-A- 0 355 928
- EP-A- 0 541 191
- EP-A- 0 727 404
- US-A- 5 380 690
- CHEMICAL ABSTRACTS, vol. 114, no. 16, 22 April 1991 Columbus, Ohio, US; abstract no. 145779, LI, D., TAO, L., ZHANG, Y., WANG H., HAEN J. AND ZHENG L.: "Effect of phosphorus and magnesium on acidity, activity and olefin selectivity of H-ZSM 5 zeolite" XP002090576 & SHIYOU HUAGONG, vol. 19, no. 7, 1990, pages 449-454,
- DATABASE WPI Week 199722, Derwent Publications Ltd., London, GB; Class A41, AN 1997-236919 'Cracking catalyst of rich producing olefin(s)' & CN 1 099 788 95 (INST PETROCHEMICAL IND SCI CHINA PETROCH) 08 March 1995

## Description

### Field of the Invention

This present invention relates to a petroleum hydrocarbon catalytic pyrolysis catalyst for producing light olefins, and the process for preparing the same, and more particularly to a petroleum hydrocarbon catalytic pyrolysis catalyst for producing mainly ethylene, propylene, and also butylene as by-products.

### Background of the Invention

The traditional method for the production of ethylene from petroleum hydrocarbon is by steam thermal cracking in tubular furnace. The feeds adopted in steam thermal cracking are ethane, propane, butane, naphtha or atmospheric gas oil (AGO). The method using heavier hydrocarbon thermal cracking on solid heat carrier for producing ethylene also exists. The heat carriers generally adopted are inert solid particles such as quartz sand, coke, coke carbon, etc

A number of documents reported the methods relating the production of light olefins by petroleum hydrocarbon cracking or pyrolysis conversion with catalysts. USP 3,541,179, USP 3,647,682, DD 225,135 and SU 1,214,726 adopt the oxides supported metal catalysts, wherein the support can be SiO₂ · Al₂O₃ or other oxides and the metal components are selected from elements of IIB, VB, VIIB and VIIIB groups. As the supported metal possesses dehydrogenation property, it also accelerates the condensation and coking reaction during the reaction process of cracking. Hence, this type of catalysts can only be used for processing light feed stocks (< 220°C). Some patents adopt the composite oxides as catalysts, for example, USP 3,725,495 and USP 3,839,485 reported the catalysts comprising mainly ZrO₂ and/or HfO₂, and also Al₂O₃, Cr₂O_{3,} MnO₂ and/or Fe₂O₃ and alkali and alkaline metal oxides. Although alkali and alkaline earth metal oxide catalysts can promote the yield of ethylene, quite a lot of CO and CO₂ will be formed simultaneously.

In the field of the production of light olefins by petroleum hydrocarbon cracking with solid acid catalyst, DD 152,356A adopts the amorphous SiO₂ · Al₂O₃ catalyst for cracking various liquid hydrocarbon and hydrocarbon fractions including gasoline, kerosene, gas oil or vacuum distillates, at 600~800°C to produce light olefins with a C₂⁼~C₄⁼ olefin yield of 40~50wt% based on the feed. JP 60-224,418 discloses cracking catalyst using HZSM-5 as active component and alumina as matrix, for catalytic cracking a feed stock of C₅~C₂₅ paraffinic hydrocarbons at 600~750°C to obtain a C₂⁼~C₄⁼ olefin yield of roughly 30wt%. USP 3,758,403 revealed that a catalyst comprising both ZSM-5 zeolites and a large pore zeolite (e.g. X type or Y type) as active components in a ratio of 1:10~3:1 displayed a performance of raising gasoline octane number while increasing C₃⁼~C₄⁼ olefin yield to about 10wt%. In CN1069016A, a catalyst comprising 30~90wt% SiO₂, 20~70wt% Al₂O₃, 0.5~30wt% alkali and alkaline earth metal oxides and 1~30wt% faujasite can produce 17~27wt% yield of C₂⁼, 30~40wt% yield of C₂⁼~C₄⁼ at 650~900°C with the heavy hydrocarbon as feedstock. In USP4,980,053, a catalyst comprising HZSM-5 as active component supported on kaolin matrix obtained 40wt% yield of C₃⁼ + C₄⁼ by cracking the heavy hydrocarbon feed at 500~650°C, but the yield of C₂⁼ was low. In CN1083092A, an acidic molecular siege catalyst containing crosslinking pillared interlayered hectorite molecular sieve and/or rare earth pentasil high silica zeolite is used for cracking heavy hydrocarbons at 680-780 and obtains a yield of 23wt C₂ and 50 wt / C₂ -C_{4.} USP 5,380,690 and ZL CN93102783.7 revealed a catalyst using a Y type zeolite and a phosphorus and rare earth containing high silica zeolite having a structure of pentasil as active components, and this catalyst with heavy oil fractions as feed stock can increase at 500~600°C the gasoline octane number as well as the yield of C₂⁼~C₄⁼, mainly the yield of C₃⁼ and C₄⁼.

EPA 0903178 discloses a molecular sieve containing composition, which can be applied in catalytic cracking reaction for producing more ethylene and propylene, and its preparation method. The composition contains a pentasil-type molecular sieve having a SiO₂/A1₂O₃ molar ratio of 15-60, prepared by activation and modification with phosphorus, alkaline earth metal and transition metal. The composition essentially comprises 85 to 98 %wt of pentasil-type molecular sieve, 1 to 10 %wt of P₂O₅, 0.3 to 5 %wt of alkaline earth oxide, and 0.3 to 5 %wt of transition metal oxide. The molecular sieve structure and active centres have high thermal and hydrothermal stability. The salient feature of this composition is that when applied as an active component of cracking catalyst for catalytic pyrolysis process, the yield of ethylene is above 18% and propylene is more than 40%.

Dalian Inst. Chem. Phys., Acad. Sin., Dalian, Peop. Rep. China Shiyou Huagong, 1990, 19(7), 449-454, discloses pulse microreactor-chromatograph and temperature program desorption techniques are used for studying the effects of adding phosphorus and/or magnesium on acidity, n-hexane cracking activity, hydrogen transfer activity and olefin selectivity of HZSM-5 zeolites. As phosphorus and magnesium contents are increased, the number of acid sites resulting from pyridine poisoning under reaction condition, the cracking activity of n-hexane and conversion frequency per unit of acid sites are decreased. When magnesium is added to 3% phosphorus modified HZSM-5 zeolite, the number of acid sites, the cracking activity of n-hexane and the conversion frequency per unit of acid sites are increased with increasing magnesium content. Results show further that cracking reaction takes place mainly on stronger acid sites, with the decrease in acidity of zeolite, hydrogen transfer reaction weakens, but olefin selectivity increases. Results of ammonia TPD show that the numbers of both strong and weak acid sites of HZSM-5 decrease with the increasing contents of phosphorus and/or magnesium, but the strong acid sites decrease at a quicker rate than the weak acid sites, and the strong acid peak disappears when a certain value of phosphorus and/or magnesium content is reached. When adding magnesium to 3% phosphorus modified HZSM-5, both strong and weak acid sites in the zeolite are increased with increasing magnesium content.

The object of the present invention is to provide a novel zeolite-containing catalyst, said catalyst can attain the same level of yield of light olefins as that of steam thermal cracking at a lower reaction temperature than that of steam thermal cracking.

Another object of the present invention is to provide a method for preparing the said catalyst.

The further objects including the application of the said catalyst can be all learned from the content of the specification of the present invention including the examples.

The present invention provides a catalyst comprising a mixture of a phosphorus-magnesium or phosphorus-calcium containing high silica zeolite having the structure of pentasil and a Y type zeolite. The phosphorus existing in the zeolite enables the zeolite to have higher hydrothermal activity-stability; aluminum or magnesium or calcium existing in the zeolite can adjust the acidity of the zeolite, which is favorable to the formation of C₂⁼. During the catalytic pyrolysis process in the presence of an acidic catalyst, hydrocarbon cracking reaction is carried out based on the carbonium ion reaction mechanism, hence the light olefins produced are mainly C₃⁼ and C₄⁼ - C₂⁼ is commonly formed by free radical reaction mechanism in thermal cracking hydrocarbons, therefore acidic catalyst is unfavorable for the formation of C₂⁼. The acidity of the zeolite of the present invention is appropriately adjusted, thus the catalyst of the invention not only decreases the activation energy of the hydrocarbon cracking reaction, and consequently the reaction can proceed at a lower temperature than that of steam thermal cracking, but also increases the yield of C₂⁼.

The present invention provides a catalyst which comprises 10 to 70 wt% of clay, 5 to 85 wt% of inorganic oxides and 1 to 50 wt% of zeolite based on the total weight of the catalyst, wherein said zeolite comprises a mixture of up to 25 wt% Y type zeolite and at least 75 wt% of phosphorus and magnesium or phosphorus and calcium containing high silica zeolite having a structure of pentasil, wherein said high silica zeolite is ZSM-5, ZSM-8 or ZSM-11 type zeolite containing 2 to 8 wt% of phosphorus based on the weight of the zeolite, and 0.3 to 3 wt% of aluminum or magnesium or calcium calculated as the oxides, having a silica/alumina mole ratio of 15 to 60.

Said clay in the catalyst of the invention can be all kind of clays usually used as a carrier for cracking catalyst, either natural or synthesized such as kaolin and kaolin polyhydrate, and may optionally be subjected to various chemical and/or physical treatment.

Said inorganic oxides in the catalyst of the invention are selected from amorphous SiO₂ - A1₂O₃, A1₂O₃ and/or SiO₂.

Said Y type zeolite in the catalyst of the invention may be a rare earth metal ion exchanged Y (REY) zeolite with a content of rare earth not less than 14 wt% (calculated as RE₂O₃), and may also be a stabilized high silica Y type zeolite with a higher silica/alumina mole ratio prepared by various chemical and/or physical method, such as hydrothermal method, acid treatment, framework silicon enriching method, or SiCl₄ treatment method.

Said or phosphorus and magnesium or phosphorus and calcium containing high silica zeolite having a structure of pentasil in the catalyst of the invention is a kind of high silica zeolite containing 2~8 wt% (based on the weight of zeolite) of phosphorus (calculated as P₂O₅) and 0.3~3 wt% of magnesium or calcium (calculated as oxide), such as ZSM-55, ZSM-8 or ZSM-11 type zeolite, having a silica/alumina mole ratio of 15~60.

The preparation method of the catalyst of the invention is as follows: mixing the precursor of the inorganic oxides with clay according to a predetermined ratio, adding de-cationized water to obtain a slurry with a solid content of 10~50wt%, adjusting and maintaining the pH value of the slurry to 2~4 using an inorganic acid such as hydrochloric acid, nitric acid, phosphoric acid or sulfuric acid, after aging statically at 20~80°C for 0~2 hrs adding into it a pre-calculated amount of zeolite, homogenizing, spray drying, washing off the free sodium ions and drying.

Said precursor of the inorganic oxides is selected from aluminum sol, pseudo-boehmite, silica sol or its mixture, and silica-alumina sol or gel.

Said clay can be all kind of clays usually used as a carrier for cracking catalyst, either natural or synthesized, such as kaolin, kaolin polyhydrate, and may optionally be subjected to various chemical and/or physical treatment.

Said inorganic acids are selected from hydrochloric acid , nitric acid, phosphoric acid or sulfuric acid.

Said zeolite is a phosphorus and magnesium or phosphorus and calcium containing high silica zeolite having a structure of pentasil in mixture of said high silica zeolite and a Y type zeolite, wherein the former is a kind of high silica zeolite containing 2~8wt% (based on the weight of zeolite) of phosphorus (calculated as P₂O₅) and 0.3~3 wt% of magnesium or calcium (calculated as oxide) such as ZSM-5, ZSM-8 or ZSM-11 type zeolite, having a silica/alumina mole ratio of 15~60.

The said high silica zeolite may also contain 0.3~3% (based on the weight of zeolite) of nickel (calculated as oxide).

The preparation method of the said zeolite is as follows: mixing homogeneously the high silica zeolite having a structure of pentasil with an aqueous solution containing phosphorus and magnesium or calcium compounds according to a water/solid weight ratio of 1~3:1, impregnating for 0.5~4 hrs, drying at 100~120°C, and then calcining at 450~650°C for 1~4 hrs. Nickel on the said high silica zeolite can also be introduced by mixing nickel compound together with phosphorus and magnesium or phosphorus and calcium compounds in an aqueous solution and impregnating said high silica zeolite in said aqueous solution. The said high silica zeolites having a structure of pentasil are the type of high silica zeolites of ZSM-5, ZSM-8 or ZSM-11 type having a silica/alumina mole ratio of 15~60. The said phosphorus compound containing aqueous solution is preferably the aqueous solution of phosphoric acid, the magnesium or calcium compound containing aqueous solution can be the aqueous solution of the nitrate, hydrochloride and sulfate of these elements, preferably the aqueous solution of nitrate or hydrochloride. The said nickel compounds can be nitrate, hydrochloride, or sulfate.

The Y type zeolite in the catalyst of the invention can be the rare earth metal ion exchanged REY zeolite having a rare earth metal content of not less than 14wt% (calculated as RE₂O₃) based on the weight of the zeolite, and may also be a stabilized high silica Y type zeolite having a higher silica/alumina mole ratio prepared by various chemical method and/or physical method, such as hydrothermal method, acid treatment method, framework silica enriching method, or SiCl₄ treatment method.

The catalyst provided by the present invention can attain the same level of yield of light olefins as that of steam thermal cracking reaction at a lower reaction temperature than that of steam thermal cracking reaction. The said catalyst displays the excellent hydrothermal activity-stability as well as the yields of light olefins, especially the yields of C₂⁼ and C₃⁼. For example, the said catalyst can achieve a yield of 20wt% (based on the feed) of C₂⁼, with the total yields of C₂⁼~ C₄⁼ being up to 54wt% under the reaction conditions of 680°C, a catalyst/oil weight ratio of 10 and WHSV (weight hour space velocity) of 10 hrs⁻¹, using VGO (vacuum gas oil) as feedstock.

The present invention well be further described with reference to the following examples, which, however, shall not be construed to limit the scope of the present invention.

The phosphorus and magnesium or phosphorus and calcium containing high silica zeolite, which may optionally contain nickel, having a structure of pentasil used in the examples is prepared as follows: ion-exchanging the commercial product of ZSM-5 zeolite having a silica/alumina mole ratio of 25 with ammonium nitrate solution according to a weight ratio of zeolite (anhydrous basis) : ammonium nitrate :de-cationized water = 1:1:20 at 90°C for 2 hrs, after filtering and leaching the resultant was ion-exchanged once more to obtain ammonium type of ZSM-5 with the sodium content (calculated as Na₂O) of less than 0.15wt% based on the weight of the zeolite, mixing said homogeneously ammonium type of ZSM-5 with a H₃PO₄,de-cationized water and MgCl₂ or CaCl₂ containing solution, in which Ni(NO₃)₂ may optionally added ,according to a liquid /solid weight ratio of 2:1, followed by stirring and impregnating for 2 hrs, drying at 120°C, and then calcining at 550°C for 2 hrs. The resulting ZSM-5 prepared by the above procedure containing 5.0wt% of P₂O₅ and 1.4wt% of MgO is marked as P · Mg-Z zeolite, the one containing 4.9wt% P₂O₅ and 2.0wt% of CaO is marked as P · Ca-Z zeolite. The one containing 5.0wt% of P₂O₅, 1.4wt% of MgO and 1.2wt% of NiO is marked as P · Mg · Ni-Z.

### Example, 1

This example relates to the preparation and the cracking performance of the catalyst of the invention using clay as matrix, pseudo-boehmite as binder and dual-zeolites as active component.

Slurring 15.3 Kg kaolin polyhydrate with 34.7Kg de-cationized water, adding 19.4Kg pseudo-boehmite and 1.65L hydrochloric acid, stirring homogeneously, aging statically at 75°C for 1 hr, maintaining the pH value in the range of 2~4, lowing the temperature to 60°C , adding 3.0Kg (anhydrous basis) P · Mg-Z zeolite, 0.8Kg (anhydrous basis) SRY zeolite (commercial name, stabilized Y type zeolite) and 5 Kg de-cationized water, homogenizing , spray drying, washing off the free sodium ions, and drying the resultant to obtain catalyst sample D.

### Comparative Example 1

Using the phosphorus and rare earth containing high silica zeolite having a structure of pentasil, known has ZRP (commercial name) as active component instead of P · Mg-Z zeolite used in example 1 to prepare comparative example 1 according to the same procedure and composition used for the preparation of sample D.

Table 1 exhibits the composition of catalyst D and comparative example 1. The evaluation results in micro-reactor for sample D and comparative example 1 after hydrothermal treatment at 800°C with 100% steam for 4 hrs are indicated in table 2. The evaluation conditions were: reaction temperature 520°C; catalyst/oil weight ratio 3.2; WHSV 16h⁻¹; catalyst loading 5.0g. The properties of the feed are: distillation range 229-340°C; paraffinic hydrocarbon 45.5 wt%; naphthenic hydrocarbon 35.7 wt%; aromatic hydrocarbon 18.2 wt%; colloid 0.6 wt%.

Table 2 shows that the C₂⁼ yield and the C₂⁼/C₃⁼ ratio in the yields obtained by the catalyst of the invention is 2.5 times and 3 times that of comparative example 1 respectively.

**Table 1**

| Catalyst sample | D | Comparative 1 |
|---|---|---|
| Composition, wt.% | | |
| Kaolin clay | 53.0 | 53.0 |
| Al₂O₃ | 28.0 | 28.0 |
| Zeolite, wt% | | |
| P · Mg-Z | 15.0 | |
| ZRP | | 15.0 |
| SRY | 4.0 | 4.0 |

**Table 2**

| Catalyst sample | D | Comparative 1 |
|---|---|---|
| Activity, wt% | 73 | 72 |
| Cracking gas of, wt% | | |
| wherein, C₂⁼ | 33.4 | 25.39 |
| C₃⁼ | 3.29 | 1.32 |
| C₄⁼ | 7.61 | 8.99 |
| C₂~C₄, wt% | 4.88 | 6.53 |
| C₂⁼/C₃⁼ | 15.78 | 16.84 |
| | 0.43 | 0.15 |

### Examples 2 and 3

These examples illustrate the preparation and cracking performance of the catalyst of the present invention using clay as matrix, pseudo-boehmite and aluminum sol as binder, and double-components of zeolite as active component.

Slurrying 3.26Kg kaolin polyhydrate with 10.7Kg de-cationized water, adding 1.82Kg pseudo-boehmite and 0.337L hydrochloric acid, stirring homogeneously, aging statically at 75°C for 1 hr, maintaining the pH value in the range of 2~4, lowing the temperature to 60°C, adding 0.642Kg aluminum sol (a commercial product with Al₂O₃ content of 0.2164wt%), stirring homogeneously, adding 0.675Kg (anhydrous basis) P · Mg-Z zeolite and 0.135Kg (anhydrous basis) SRY zeolite and 3.68Kg de-cationized water, homogenizing, spray drying washing off the isolated sodium ions, and drying to obtain the catalyst sample K.

Using P · Mg · Ni-Z zeolite instead of P · Mg -Z zeolite to prepare catalyst sample L.

### Comparative Example 2

Using the phosphorus and rare earth containing high silica zeolite having a structure of pentasil, ZRP, as active component instead of the zeolite used in the catalyst of the invention to prepare the comparative example 2 according to the procedure and composition used in examples 2 and 3.

Table 3 lists the composition of the above catalyst samples. The evaluation results from FFB unit of the above catalyst samples after hydrothermal treatment at 800°C,100% steam for 17 hrs are described in table 4. The evaluation conditions were; reaction temperature 680°C; catalyst/oil weight ratio 10; WHSV 10hr⁻¹; water injection 80 wt%; catalyst load 180g; the distillation range of the feed for the FFB test is 346-546°C; UOP K value of the feed 12.4; CCR 0.15 wt%; density (at 20°C) 0.8730 g/cm³.

The data in table 4 show that the yields of C₂⁼ and C₂⁼~C₄⁼ by the catalyst of the invention are 2~5wt% and 1.5~4.5wt% higher respectively than those of comparative example 2.

**Table 3**

| Catalyst sample | K | L | Comparative 2 |
|---|---|---|---|
| Composition, wt.% | | | |
| Kaolin clay | 53 | 53 | 53 |
| Al₂O₃ | 29 | 29 | 29 |
| Zeolite, wt% | | | |
| P · Mg-Z | 15 | | |
| ZRP | | 15 | 15 |
| SRY | 4 | 3 | 3 |

**Table 4**

| Catalyst sample | K | L | Comparative 2 |
|---|---|---|---|
| Product yield, wt% | 73.17 | 70.48 | 69.06 |
| Cracking gas of, wt% | 19.20 | 22.26 | 17.55 |
| wherein, C₂⁼ | 27.83 | 22.66 | 24.88 |
| C₃⁼ | 11.30 | 10.37 | 11.31 |
| C₄⁼ | 10.07 | 14.36 | 10.09 |
| Gasoline C₅~221 °C) | 4.52 | 3.48 | 3.93 |
| LCO (221~330 °C) | 3.23 | 3.40 | 4.07 |
| Coke | 9.01 | 8.28 | 12.85 |
| Convention, wt% | 92.25 | 93.12 | 92.00 |
| C₂⁼+C₃⁼+C₄⁼, wt% | 58.33 | 55.29 | 53.74 |

### Example 4

This example illustrates the preparation and cracking performance of the catalyst of the present invention using clay as matrix, pseudo-boehmite and aluminum sol as binder and double components of zeolite as active component.

The catalyst sample 4 is prepared in a pilot plant of catalyst preparation. Slurrying 132.4Kg kaolin polyhydrate with 428Kg de-cationized water, adding 72.8Kg pseudo-boehmite and 13.48L hydrochloric acid, stirring homogeneously, aging statically at 75°C for 1hr, maintaining the pH value in the range of 2~4, towing temperature to 60 °C, adding 24.96Kg aluminum sol, stirring homogeneously, adding 36Kg (anhydrous basins) P · Mg-Z zeolite and 63Kg (anhydrous basis) SRY and 147Kg de-catibnized water, homogenizing, spray drying, washing off the free sodium ions and drying to obtain the catalyst sample M.

Table 5 lists the composition of catalyst sample M. The evaluation results from pilot plant riser of catalytic pyrolysis cracldng of sample M after hydrothermal treatment at 790°C, 100% steam for 27 hrs in a pilot plant hydrothermal treating are described in table 6 The catalyst inventory of the pilot plant riser is 55Kg. The properties of the feedstock used are as follows: density (20°C) 0.8826g/cm³, carbon residue 2.9wt%, freezing point 46 °C, saturate hydrocarbon 59.8wt%, aromatic hydrocarbon 26.4wt%, colloid 13.2wt%, asphaltene 0.6wt%.

**Table 5**

| Catalyst sample | M |
|---|---|
| Composition, wt% | |
| Kaolin clay | 51.5 |
| Al₂O₃ | 25 |
| Zeolite | |
| P · Mg-Z | 20 |
| SRY | 3.5 |

**Table 6**

| Catalyst sample | M |
|---|---|
| Operation condition | |
| reaction temp., °C | 660 |
| reaction pres.(gauge), Kg/cm² | 0.07 |
| feeding rate, Kg/hr | 2.2 |
| water injection (based on total feed), wt% | 80 |
| catalyst/oil ratio | 37 |
| residual time, sec. | 1.4 |
| regeneration temp., °C | 720 |
| feed preheat temp., °C | 333 |

| Product yields, wt | |
|---|---|
| cracking gas | 61.53 |
| wherein dry gas | 40.34 |
| liquefied gas | 21.19 |
| liquid product | 26.92 |
| coke | 10.30 |
| loss | 1.25 |
| total | 100 |

| Gas product yields, wt | |
|---|---|
| CH₄ | 12.96 |
| C₂H₄ | 21.86 |
| C₃H₆ | 15.04 |
| C₄H₈ | 5.70 |
| C₂⁼+ C₃⁼+ C₄⁼, | 42.60 |

## Claims

1. A catalyst composition which comprises 10 to 70 wt% of clay, 5 to 85 wt% of inorganic oxides and 1 to 50 wt% of zeolite based on the total weight of the catalyst, wherein said zeolite comprises a mixture of up to 25 wt% Y type zeolite and at least 75 wt% of phosphorus and magnesium or phosphorus and calcium containing high silica zeolite having a structure of pentasil, wherein said high silica zeolite is ZSM-5, ZSM-8 or ZSM-11 type zeolite containing 2 to 8 wt% of phosphorus based on the weight of the zeolite, and 0.3 to 3wt% of magnesium or calcium calculated as the oxides, having a silica/alumina mole ratio of 15 to 60.

2. A catalyst composition according to claim 1, wherein said clay is selected from kaolin or kaolin polyhydrate clay.

3. A catalyst composition according to claim 1 or 2, wherein said inorganic oxides are selected from amorphous silica-alumina, alumina or silica.

4. A catalyst composition according to any preceding claim, wherein said Y type zeolite is selected from rare earth metal ion exchanged Y type zeolite with a content of rare earth metal content, calculated as RE₂O₃, of not less than 14wt%, or a stabilized high silica Y type zeolite with relatively high silica/alumina mole ratio prepared by chemical and/or physical treatment.

5. A catalyst composition according to any preceding claim, wherein said phosphorus and magnesium or phosphorus and calcium containing high silica zeolite having a structure of pentasil also contains 0.3 to 3 wt% of nickel based on the weight of the zeolite and calculated as the oxide.

6. A method for the preparing of the catalyst according to claim 1, **characterized by** the steps of mixing the precursor of the inorganic oxides with clay to obtain a slurry with a solid content of 10 to 50wt%, adjusting with an inorganic acid and maintaining the pH value of the slurry at 2 to 4, after aging statically at 20 to 80°C for 0 to 2 hrs, adding the zeolites, homogenizing, spray drying, washing and drying.

7. A method according to claim 6, wherein the precursor of the inorganic oxides is selected from the group consisting of aluminum sol, pseudoboehmite, silica sol and the mixtures thereof, and silica alumina sol or gel.

8. A method according to claim 6 or 7, wherein said zeolite in the catalyst is a mixture of a phosphorus and magnesium or phosphorus and calcium containing high silica zeolite having a structure of pentasil and Y type zeolite.

9. A method according to claim 8, wherein said pentasil high silica zeolite is selected from the group consisting of ZSM-5, ZSM-8 and ZSM-11 type zeolites containing 2 to 8 wt% of phosphorus based on the weight of zeolite, and 0.3 to 3 wt% of magnesium or calcium calculated as the oxides.

10. A method according to claim 8 or 9, wherein said pentasil high silica zeolite also contains 0.3 to 3wt% of nickel based on the weight of the zeolite and calculated as the oxide.

11. A method according to claim 8 or 9, **characterized in that** the preparation of said phosphorus and magnesium or phosphorus and calcium containing pentasil high silica zeolite comprises the steps of: adding ZSM-5 or ZSM-8 or ZSM-11 type zeolite into an aqueous solution containing phosphorus and magnesium or phosphorus and calcium compounds with a water/solid ratio of 1 to 3:1, mixing homogeneously, impregnating for 0.5 to 4 hrs, drying at 100 to 120°C, and calcining at 450 to 650°C for 1 to 4 hrs.

12. A method according to claim 11, wherein said phosphorus compound containing aqueous solution is phosphoric acid aqueous solution, and said magnesium or calcium compound containing aqueous solutions are selected from aqueous solutions of their nitrates, hydrochlorides or sulfates.

13. Use of a catalyst composition according to any of claims 1 to 5 in the catalytic pyrolysis of hydrocarbons to produce light olefins, especially ethylene, propylene and butylene.

## Patentansprüche

1. Katalysatorzusammensetzung, die 10 bis 70 Gew.-% Ton, 5 bis 85 Gew.-% anorganische Oxide und 1 bis 50 Gew.-% Zeolith, auf das Gesamtgewicht des Katalysators bezogen, umfasst, wobei der Zeolith eine Mischung von bis zu 25 Gew.-% Zeolith vom Y-Typ und mindestens 75 Gew.-% phosphor- und magnesium- oder phosphor- und calciumhaltigen Zeolith mit hohem Siliciumdioxidgehalt und einer Pentasilstruktur umfasst, wobei der Zeolith mit hohem Siliciumdioxidgehalt Zeolith vom ZSM-5-, ZSM-8- oder ZSM-11-Typ ist, der 2 bis 8 Gew.-% Phosphor, auf das Gewicht des Zeoliths bezogen und 0,3 bis 3 Gew.-% Magnesium oder Calcium, als Oxide berechnet, enthält und ein Siliciumdioxid-/Aluminiumoxid-Molverhältnis von 15 bis 60 aufweist.

2. Katalysatorzusammensetzung nach Anspruch 1, wobei der Ton unter Kaolin oder Kaolinpolyhydratton ausgewählt wird.

3. Katalysatorzusammensetzung nach Anspruch 1 oder 2, wobei die anorganischen Oxide unter amorphem Silicium-Aluminiumoxid, Aluminiumoxid oder Siliciumdioxid ausgewählt wird.

4. Katalysatorzusammensetzung nach einem der vorhergehenden Ansprüche, wobei der Zeolith vom Y-Typ unter mit Seltenerdmetallionen ausgetauschtem Zeolith vom Y-Typ mit einem Seltenerdmetallgehalt, als Re₂O₃ berechnet, von nicht weniger als 14 Gew.-% oder einem stabilisierten Zeolith vom Y-Typ mit hohem Siliciumdioxidgehalt mit einem relativ hohen Siliciumdioxid-/Aluminiumoxid-Molverhältnis ausgewählt wird, der durch chemische und/oder physikalische Behandlung zubereitet wird.

5. Katalysatorzusammensetzung nach einem der vorhergehenden Ansprüche, wobei der phosphor- und magnesium- oder phosphor- und calciumhaltige Zeolith mit hohem Silicumdioxidgehalt mit einer Pentasilstruktur auch 0,3 bis 3 Gew.-% Nickel, auf das Gewicht des Zeoliths bezogen und als Oxid berechnet, enthält.

6. Verfahren für das Zubereiten des Katalysator nach Anspruch 1, **gekennzeichnet durch** die Schritte des Mischens des Vorläufers der anorganischen Oxide mit Ton unter Erzielung einer Aufschlämmung mit einem Feststoffgehalt von 10 bis 50 Gew.-%, Einstellens mit einer anorganischen Säure und Aufrechterhaltens des pH-Werts der Aufschlämmung bei 2 bis 4 nach dem statischen Altern bei 20 bis 80 °C für 0 bis 2 h, Zusetzens der Zeolithe, Homogenisierens, Sprühtrocknens, Waschens und Trocknens.

7. Verfahren nach Anspruch 6, wobei der Vorläufer der anorganischen Oxide aus der Gruppe ausgewählt ist bestehend aus Aluminiumsol, Pseudoböhmit, Kieselsäuresol und den Mischungen derselben und Kieselsäure-Aluminiumoxidsol oder -gel.

8. Verfahren nach Anspruch 6 oder 7, wobei der Zeolith in dem Katalysator eine Mischung von einem phosphor- und magnesium- oder phosphor- und calciumhaltigen Zeolith mit hohem Silicumdioxidgehalt und einer Pentasilstruktur und von Zeolith vom Y-Typ ist.

9. Verfahren nach Anspruch 8, wobei der Pentalsilzeolith mit hohem Siliciumdioxidgehalt aus der Gruppe ausgewählt ist bestehend aus Zeolithen vom ZSM-5-, ZSM-8- oder ZSM-11-Typ enthaltend 2 bis 8 Gew.-% Phosphor, auf das Gewicht von Zeolith bezogen, und 0,3 bis 3 Gew.-% Magnesium oder Calcium, als Oxide berechnet.

10. Verfahren nach Anspruch 8 oder 9, wobei der Pentalsilzeolith mit hohem Siliciumdioxidgehalt auch 0,3 bis 3 Gew.-% Nickel, auf das Gewicht des Zeoliths bezogen und als das Oxid berechnet, enthält.

11. Verfahren nach Anspruch 8 oder 9, **dadurch gekennzeichnet, dass** die Zubereitung des phosphor- und magnesium- oder phosphor- und calciumhaltigen Pentasilzeoliths mit hohem Silicumdioxidgehalt die Schritte des: Eingebens von Zeolith vom ZSM-5-, ZSM-8- oder ZSM-11-Typ in eine wässrige Lösung, die Phosphor- und Magnesium- oder Phosphor- und Calciumverbindungen bei einem Wasser(Feststoff-Verhältnis von 1 bis 3:1 enthält, homogenen Mischens, Imprägnierens für 0,5 bis 4 h, Trocknens bei 100 bis 120 °C und Calcinierens bei 450 bis 650 °C für 1 bis 4 h umfasst.

12. Verfahren nach Anspruch 11, wobei die eine Phosphorverbindung enthaltende wässrige Lösung wässrige Phosphorsäurelösung ist und die eine Magnesium- oder Calciumverbindung enthaltenden wässrigen Lösungen unter wässrigen Lösungen ihrer Nitrate, Hydrochloride oder Sulfate ausgewählt werden.

13. Verwendung einer Katalysatorzusammensetung nach einem der Ansprüche 1 bis 5 bei der katalytischen Pyrolyse von Kohlenwasserstoffen unter Bildung von leichten Olefinen, insbesondere Ethylen, Propylen und Butylen.

## Revendications

1. Composition catalytique qui comporte 10 à 70 % en poids d'argile, 5 à 85 % en poids d'oxydes inorganiques et 1 à 5 % en poids de zéolite sur la base du poids total du catalyseur, dans laquelle ladite zéolite comporte un mélange allant jusqu'à 25 % en poids d'une zéolite de type Y et au moins 75 % en poids d'une zéolite à teneur en silice élevée contenant du phosphore et du magnésium ou du phosphore et du calcium ayant une structure de pentasil, dans laquelle ladite zéolite à teneur en silice élevée est une zéolite de type ZSM-5, ZSM-8 ou ZSM-11 contenant 2 à 8 % en poids de phosphore sur la base du poids de la zéolite, et 0,3 à 3 % en poids de magnésium ou calcium calculé en tant qu'oxydes, ayant un rapport molaire silice/alumine de 15 à 60.

2. Composition catalytique selon la revendication 1, dans laquelle ladite argile est sélectionnée parmi de l'argile de kaolin ou de polyhydrate de kaolin.

3. Composition catalytique selon la revendication 1 ou 2, dans laquelle lesdits oxydes inorganiques sont sélectionnés parmi une silice-alumine, une alumine ou une silice amorphe.

4. Composition catalytique selon l'une quelconque des revendications précédentes, dans laquelle ladite zéolite de type Y est sélectionnée parmi une zéolite de type Y ayant subi un échange avec un ion métallique de terres rares ayant une teneur en métal de terres rares, calculée en tant que RE₂O₃, qui n'est pas inférieure à 14 % en poids, ou une zéolite de type Y à teneur en silice élevée stabilisée ayant un rapport molaire silice/alumine relativement élevé préparée par traitement chimique et/ou physique.

5. Composition catalytique selon l'une quelconque des revendications précédentes, dans laquelle ladite zéolite à teneur en silice élevée contenant du phosphore et du magnésium ou du phosphore et du calcium ayant une structure de pentasil contient également 0,3 à 3 % en poids de nickel sur la base du poids de la zéolite et calculé en tant qu'oxyde.

6. Procédé pour préparer le catalyseur selon la revendication 1, **caractérisé par** les étapes consistant à mélanger le précurseur des oxydes inorganiques avec l'argile pour obtenir une boue ayant une teneur en matières solides de 10 à 50 % en poids, ajuster à l'aide d'un acide inorganique et maintenir la valeur de pH de la boue entre 2 et 4, après vieillissement statistique à 20-80°C pendant 0 à 2 heures, ajouter les zéolites, homogénéiser, sécher par vaporisation, laver et sécher.

7. Procédé selon la revendication 6, dans lequel le précurseur des oxydes inorganiques est sélectionné parmi le groupe constitué d'un sol d'aluminium, d'une pseudo-boehmite, d'un sol de silice et des mélanges de ceux-ci, et d'un sol ou gel de silice-alumine.

8. Procédé selon la revendication 6 ou 7, dans lequel ladite zéolite dans le catalyseur est un mélange d'une zéolite à teneur en silice élevée contenant du phosphore et du magnésium ou du phosphore et du calcium ayant une structure de pentasil et d'une zéolite de type Y.

9. Procédé selon la revendication 8, dans lequel ladite zéolite à teneur en silice élevée à structure de pentasil est sélectionnée parmi le groupe constitué de zéolite de type ZSM-5, ZSM-8 et ZSM-11 contenant 2 à 8 % en poids de phosphore sur la base du poids de la zéolite, et 0,3 à 3 % en poids de magnésium ou de calcium calculé en tant qu'oxydes.

10. Procédé selon la revendication 8 ou 9, dans lequel ladite zéolite à teneur en silice élevée à structure de pentasil contient également 0,3 à 3 % en poids de nickel sur la base du poids de la zéolite et calculé en tant qu'oxyde.

11. Procédé selon la revendication 8 ou 9, **caractérisé en ce que** la préparation de ladite zéolite à teneur en silice élevée à structure de pentasil contenant du phosphore et du magnésium ou du phosphore et du calcium comporte les étapes consistant à : ajouter la zéolite de type ZSM-5 ou ZSM-8 ou ZSM-11 dans une solution aqueuse contenant des composés de phosphore et de magnésium ou de phosphore et de calcium avec un rapport eau/matières solides de 1 à 3:1, mélanger de manière homogène, imprégner pendant 0,5 à 4 heures, sécher à 100-120°C, et calciner à 450-650°C pendant 1 à 4 heures.

12. Procédé selon la revendication 11, dans lequel ladite solution aqueuse contenant un composé de phosphore est une solution aqueuse d'acide phosphorique, et lesdites solutions aqueuses contenant un composé de magnésium ou de calcium sont sélectionnées parmi des solutions aqueuses de leurs nitrates, hydrochlorures ou sulfates.

13. Utilisation d'une composition catalytique selon l'une quelconque des revendications 1 à 5 au cours de la pyrolyse catalytique d'hydrocarbures pour produire des oléfines légères, en particulier de l'éthylène, du propylène et du butylène.
